# FASCICULE DE BREVET EUROPEEN

(11) **EP 2 562 449 B1**
(45) Date de publication et mention de la délivrance du brevet: **12.03.2014**
(21) Numéro de dépôt: 12305997.4
(22) Date de dépôt: 10.08.2012
(51) Int. Cl.: F02M 25/07, F02B 3/06, F02D 9/04, F02D 9/10, F16K 1/22, F16K 1/226, F02D 9/08

(54) **Vanne de circulation de fluide à ressort de rappel axial**
Flüssigkeitskreislauf-Ventil mit axialer Rückholfeder
Fluid circulation valve having an axial return spring

(30) Priorité: 25.08.2011 FR 1157510
(43) Date de publication de la demande: 27.02.2013
(73) Titulaire: Valeo Systèmes de Contrôle Moteur, 95800 Cergy Saint Christophe (FR)
(72) Inventeur: Hodebourg, Grégory, Sartrouville 78500 (FR); Adenot, Sébastien, 95300 Pontoise (FR)
(74) Mandataire: Cardon, Nicolas

(56) Documents cités:
- DE-A1- 10 105 526
- DE-A1- 19 500 344
- DE-U1-202007 006 463
- US-A1- 2006 059 903

## Description

La présente invention concerne une vanne de circulation de fluide, destinée à équiper les moteurs à combustion interne, qu'ils soient à essence ou Diesel, de véhicules.

Plus particulièrement, quoique non exclusivement, les vannes objet de l'invention peuvent être prévues sur la ligne d'échappement des moteurs Diesel notamment à des fins de traitement des oxydes d'azote (NOx) en redirigeant une partie des gaz d'échappement dans la ligne d'admission, et sont désignées communément « vanne EGR ». Ou elles peuvent également être prévues en amont sur la ligne d'admission du moteur en dosant alors l'admission d'air dans celui-ci. D'autres applications de la vanne dans des moteurs ou autres installations à circulation de fluide (gazeux ou liquide) pourraient être envisagées sans sortir du cadre de l'invention.

Il est connu, voir, par exemple US 2006/0059903 A1 des vannes permettant de régler le débit d'un fluide comprenant :
- un corps à conduit traversant pour le fluide,
- un arbre de commande rotatif entraînant un volet obturateur du conduit, ledit arbre étant monté dans un passage du corps communiquant avec le conduit, ledit arbre étant soumis à l'action d'un ressort de rappel prévu entre le corps et l'arbre,
- des paliers en matériau à faible frottement prévus dans ledit passage entre le corps et l'arbre de commande rotatif, et
- un blocage axial de l'arbre dans ledit corps.

Ainsi, la commande en rotation de l'arbre permet de régler le débit du fluide circulant dans le conduit de la vanne selon la position angulaire donnée au volet et, dans le cas de la vanne EGR, de prélever une partie des gaz d'échappement pour la rediriger vers la ligne d'admission du moteur selon le régime moteur en présence. Quant au ressort de rappel, il permet de fermer prioritairement la vanne (le volet de l'arbre venant obturer le conduit) en cas de dysfonctionnement électrique de la vanne.

Généralement, le blocage axial de l'arbre rotatif de commande est assuré par une rondelle en U introduite, suite à l'agencement d'un palier, dans des gorges ménagées dans le corps et l'arbre, ou encore par emmanchement d'un roulement à billes logé dans un trou de réception du corps et portant l'arbre.

Ces blocages axiaux présentent cependant des défauts, en particulier pour les vannes dont le volet est très fréquemment utilisé comme les vannes EGR.

En effet, par suite de l'effort axial exercé sur l'arbre par le ressort et du fonctionnement répété et soutenu de la vanne aux régimes moteur concernés, il apparaît, à l'usage, une usure entre la rondelle en U et l'arbre au niveau de la gorge correspondante et, donc, des points durs lors de la rotation de l'arbre sur la rondelle pouvant entraîner des blocages intempestifs du volet, ainsi qu'un jeu axial provoquant alors un contact non souhaité entre le volet et le conduit.

Par ailleurs, la solution par roulement à billes nécessite, quant à elle, un outillage de montage complexe et entraîne un coût significatif.

La présente invention a pour but de remédier à ces inconvénients et concerne une vanne de circulation de fluide dont la conception du blocage axial garantit à l'usage une fiabilité de fonctionnement de la vanne et ceci même en cas de présence d'un ressort de rappel.

A cet effet, la vanne de circulation de fluide, par exemple EGR, telle que définie préalablement est remarquable, selon l'invention, par le fait que le blocage axial de l'arbre est obtenu par au moins une bague cylindrique montée solidaire en rotation sur ledit arbre et présentant une surface externe tournée vers l'un des paliers et venant au contact d'une face transversale de celui-ci.

Ainsi, grâce à l'invention, la bague fait directement office de butée axiale pour l'arbre en étant au contact du palier correspondant. Par ailleurs, la réalisation des vannes est simplifiée par la suppression des gorges de réception (et donc des arêtes vives génératrices de points durs et d'usure) des rondelles antérieures ou la suppression des roulements à billes et de l'outillage de montage associé, ce qui permet de fiabiliser la vanne et de diminuer les coûts de fabrication. Au final, l'invention permet de réaliser un arrêt axial de l'arbre rotatif de la vanne limitant le frottement et l'usure qui en découle.

Un tel résultat est avantageusement obtenu lorsque ledit arbre est soumis à l'action d'un ressort de rappel, prévu entre le corps et l'arbre. La bague vient alors au contact de la face transversale du palier concerné dans le sens du rappel axial auquel est soumis l'arbre par ledit ressort.

De préférence, la bague présente une collerette radiale définissant ladite surface externe tournée vers le palier et venant au contact de la face transversale de celui-ci. Ainsi, la collerette radiale externe permet d'offrir une grande surface de contact avec la face transversale du palier, de sorte que l'effort axial du ressort est davantage réparti sur cette surface de contact ce qui, par conséquent, contribue à réduire l'usure. Comme les paliers sont réalisés en un matériau à faible frottement, l'usure est réduite, voire quasi inexistante, lors du fonctionnement répété de l'arbre rotatif, ceci même en cas d'action d'un ressort de rappel. On supprime de la sorte l'apparition des points durs et du jeu axial.

Dans un mode de réalisation, la collerette de la bague s'applique directement contre une collerette correspondante terminant la face transversale du palier, sous l'action dudit ressort. Ainsi, une zone de contact importante est obtenue, contribuant à optimiser la répartition de l'effort axial du ressort et à réduire l'usure.

Une rondelle pourra être agencée en regard de l'autre palier, entre l'arbre et le corps, pour le blocage axial de l'arbre dans le sens opposé à l'action du ressort. Une simple rondelle suffit puisque celle-ci sert notamment au montage de l'arbre et n'est finalement quasiment pas sollicitée lors du fonctionnement de la vanne du fait que l'effort permanent du ressort s'effectue dans le sens opposé, avec la bague.

Dans un autre mode de réalisation, la collerette de la bague s'engage dans un lamage ménagé dans la face transversale correspondante dudit palier.

Par exemple, autour de la bague solidaire de l'arbre rotatif, est monté le palier logé dans ledit passage, avec la collerette radiale de la bague qui est reçue, avec un jeu fonctionnel, dans le lamage du palier en venant en butée axiale, d'un côté, avec le fond du lamage, dans le sens de l'action du ressort, ou, de l'autre côté, avec une partie du corps délimitant le passage dans le sens opposé. Cette réalisation s'affranchit de la rondelle précédente du fait que la collerette de la bague elle-même se trouve prise entre le fond du lamage et le corps servant de butées axiales dans les deux sens.

Dans encore un autre mode de réalisation, la collerette de la bague s'engage dans un lamage ménagé dans le corps de la vanne.

Par exemple, le palier est alors monté sur l'arbre en vis-à-vis de la bague, tandis que la collerette s'engage, avec un jeu fonctionnel axial, dans le lamage d'un trou de passage de réception de la bague, ménagé dans une partie du corps qui délimite le passage, de sorte que la collerette peut venir en butée, d'un côté, avec le palier dans le sens de l'action du ressort ou, de l'autre côté, avec le fond du lamage du corps, dans l'autre sens.

De préférence, ladite bague est solidaire en rotation de l'arbre par emmanchement, soudage ou autre, et les paliers sont montés par ajustement serré, tel que par emmanchement, dans le passage du corps.

Pour minimiser encore les frottements, la bague est réalisée en un matériau compatible avec le matériau du palier et, à titre d'exemples, les paliers sont réalisés en acier inoxydable ou en des alliages de cuivre du type cupro-nickel, bronze.

Les paliers peuvent être droits, c'est-à-dire être dépourvus de parties d'appui arrondies.

Chaque palier peut être obtenu autrement que par surmoulage.

Chaque palier peut être contenu dans le corps, c'est-à-dire que chaque palier ne fait pas saillie extérieurement au-delà du contour extérieur du corps. Le corps peut être monobloc.

La bague d'arrêt et le ressort peuvent ne pas être en contact l'un avec l'autre. Le ressort est par exemple disposé au niveau de l'extrémité de l'arbre opposée à celle à proximité de laquelle est disposée la bague.

La rondelle peut être configurée de manière à permettre un arrêt bilatéral de l'arbre.

La vanne peut être une vanne EGR ou un doseur, par exemple.
Les figures annexées feront bien comprendre comment l'invention peut être réalisée. Sur ces figures, des références identiques désignent des éléments semblables.
La figure 1 est une coupe transversale partielle d'un exemple de réalisation d'une vanne de circulation de fluide à ressort de rappel avec, conformément à l'invention, le blocage axial de l'arbre de commande rotatif de la vanne selon un premier mode de réalisation.
La figure 2 montre, en coupe transversale, le blocage axial de l'arbre de commande rotatif de la vanne selon un deuxième mode de réalisation.
La figure 3 montre, en coupe transversale, le blocage axial de l'arbre de commande rotatif de la vanne selon un troisième mode de réalisation.

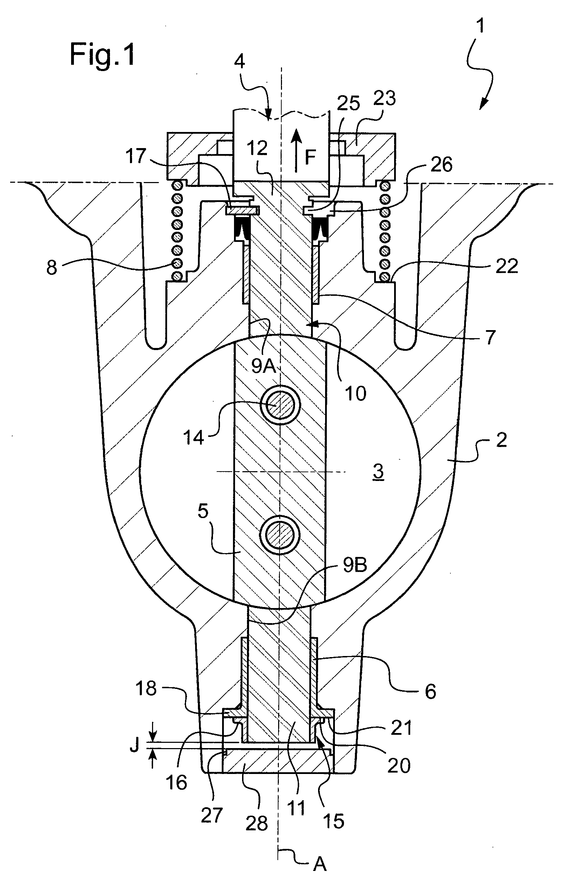

La vanne de circulation de fluide 1 représentée sur la figure 1 est, par exemple, la vanne de recirculation des gaz d'échappement d'un moteur, dont le but a été rappelé précédemment, mais l'invention n'est nullement limitée à ce type de vanne et concerne d'une façon générale les vannes à arbre d'entraînement rotatif de l'obturateur (volet) soumis à l'action d'un ressort de rappel.

La vanne 1 comprend, de façon usuelle, un corps 2 à l'intérieur duquel est ménagé un conduit longitudinal 3, et qui est destiné à être monté, par l'intermédiaire de raccords, sur une dérivation de la ligne d'échappement du moteur de manière que la partie des gaz d'échappement circulant dans cette dérivation traverse le conduit et soit déviée vers la ligne d'admission pour être à nouveau brûlée par le moteur. Les raccords et les lignes d'échappement et d'admission n'ont pas été représentés, étant bien connus en eux-mêmes et ne faisant pas partie de l'invention.

Dans le corps 2 de la vanne 1, issu généralement de fonderie, sont reçus principalement un arbre de commande rotatif 4 avec, solidaire de celui-ci, un obturateur 5 du type à volet, du conduit 3, deux paliers 6, 7 pour le mouvement rotatif de l'arbre 4 par rapport à son axe géométrique A, un ressort de rappel 8 exerçant un effort sur l'arbre dans un sens selon l'axe, et un blocage axial de l'arbre 4.

Plus particulièrement, deux trous alignés 9A, 9B sont ménagés dans le corps 2, perpendiculairement au conduit longitudinal 3 en passant diamétralement par celui-ci, pour former un passage 10 de section circulaire, et reçoivent respectivement les deux paliers 6, 7. Ceux-ci sont cylindriques de section annulaire et sont, dans cet exemple, montés à force dans les trous 9A, 9B de façon à être immobilisés en position (en rotation et en translation) par rapport au corps 2 de la vanne. Ces paliers fixes 6, 7 sont réalisés en un matériau qui leur assure des propriétés autolubrifiantes et anticorrosives appropriées procurant une longévité renforcée. Pour cela, ils peuvent être en un alliage de cuivre et de nickel ou d'étain, ou en un acier inoxydable.

Dans ces deux paliers 6, 7 est reçu l'arbre de commande 4 qui peut ainsi pivoté librement autour de l'axe A, par un ajustement glissant prévu entre l'arbre et les paliers. L'extrémité 11 de l'arbre, qualifiée d'inférieure par rapport à la figure 1, s'engage dans le palier correspondant 6, tandis que l'autre extrémité supérieure 12 traverse l'autre palier 7 et débouche vers l'extérieur du corps 2 de la vanne 1 pour être reliée à la commande proprement dite de l'arbre 4, non représentée sur la figure 1 car d'un type usuel en soi.

A l'arbre de commande 4 est lié en rotation le volet d'obturation 5 par des organes de fixation 14, par soudage, ou autre, ce qui permet au volet de pouvoir tourner avec l'arbre entre deux positions extrêmes dont l'une, ouverte totalement (le plan du volet étant dans le sens de circulation des gaz, comme sur la figure 1), laisse passer la partie des gaz d'échappement déviée, et dont l'autre, fermée contre la paroi latérale du conduit 3, éventuellement via un joint d'étanchéité non illustré (le plan du volet étant perpendiculaire au sens de circulation des gaz, figure 1).

Conformément à l'invention, le blocage axial de l'arbre 4 est obtenu, dans le premier mode de réalisation illustré sur la figure 1, par une bague cylindrique 15 directement montée sur l'arbre et munie d'une collerette radiale externe 16 qui présente une surface 20 venant au contact du palier 6 par suite de l'action du ressort de rappel 8 (flèche F). Et également, dans le sens opposé à l'action du ressort, par une rondelle 17 montée sur l'arbre 4 et située du côté de l'autre palier 7, comme on le verra ultérieurement.

En particulier, la bague cylindrique 15 est solidarisée de l'extrémité 11 de l'arbre 4 par emmanchement ce qui l'immobilise en rotation et en translation par rapport à l'arbre dans la position choisie. Tout autre moyen pour assurer une telle liaison pourrait être envisagé. La collerette radiale 16 terminant une extrémité de la bague 15 est destinée à s'appliquer directement contre une collerette radiale externe 18 terminant également le palier lisse 6 qui est logé dans le trou du passage 9A et qui porte, à son tour, l'extrémité 11 de l'arbre. On comprend donc que la bague 15 fait office de butée axiale pour l'arbre 4 dans le sens de l'effort axial F exercé par le ressort 8, selon l'axe A, et que le contact entre la bague 15 et le palier 6 s'établit directement par les faces transversales externes 20, 21 de leurs collerettes respectives 16, 18, sur une zone ou surface de contact importante.

De la sorte, l'effort axial engendré par le ressort se répartit sur cette grande zone de contact qui répond donc aux exigences souhaitées puisque le contact s'effectue de façon privilégié sur celle-ci par suite de l'action permanente du ressort durant la vie de la vanne. En outre, comme le palier 6 est en un matériau à faible frottement et que la bague 15 est en un matériau compatible avec le palier, voire identique à celui-ci, l'usure est quasi inexistante.

A propos du ressort 8, on voit, sur la figure 1, que l'extrémité 12 de l'arbre 4 de la vanne 1 se prolonge au-delà de la rondelle 17 et on trouve, autour du corps 2 entourant le palier 7, le ressort 4, situé entre un épaulement externe 22 du corps et un chapeau 23 lié à l'arbre, disposé autour de celui-ci. On comprend donc que le ressort 8 exerce une action sur l'arbre rotatif 4 du corps dans le sens F qui tend à le faire sortir du passage 10 par rapport aux paliers fixes, le ressort 8 étant employé à des fins de sécurité pour permettre de fermer l'obturateur de la vanne en cas de défaut électrique. La bague cylindrique 15 à collerette 16, au contact direct du palier 6, permet ainsi d'éviter les problèmes antérieurs de frottement et d'usure entraînant, par suite, le dysfonctionnement de la vanne comme on l'a rappelé préalablement.

Concernant la rondelle 17 faisant office de butée axiale dans le sens opposé au sens F selon l'axe A, elle se présente sous forme de U montée dans une gorge périphérique 25 de l'extrémité 12 de l'arbre et s'applique dans un élargissement 26 du trou 9B du passage, en bout de l'extrémité de l'arbre et à distance du palier 7.

Ainsi, la rondelle 17 en U est seulement en contact avec le corps 2 afin de réaliser l'arrêt axial de l'arbre 4 dans ce sens. On remarque que le palier 7 est simplement de forme annulaire constante et que la rondelle est tournée vers la commande de la vanne 7. Comme cette rondelle 17 en U fait office notamment de butée axiale de montage dans le sens opposé à F, elle n'est pas soumise à l'action du ressort 8 durant le fonctionnement de la vanne et, donc, à une quelconque usure, contrairement à la bague 15 faisant office de butée axiale fonctionnelle dans le sens F. En effet, comme déjà dit, cette bague est soumise à l'action permanente du ressort et, grâce à son montage sans usinage sur l'arbre rotatif 4 et à la collerette radiale 16 à surface de contact 20 importante directement avec le palier à faible frottement, elle peut supporter les rotations du volet de l'arbre lors du fonctionnement de la vanne, en évitant les problèmes de frottement et d'usure.

Par ailleurs, un jeu axial fonctionnel entre la bague 15 et son palier 6 est réglé par un outillage de montage lors de l'emmanchement de la bague sur l'arbre. Lors du fonctionnement de la vanne 1, ce jeu fonctionnel J disparaît sous l'action du ressort 8 tirant axialement sur l'arbre 4 coulissant dans les paliers, et se trouve alors entre la bague 15 (à fleur de la face transversale de l'extrémité 11 de l'arbre 4) et une partie 27 du corps sous forme de bouchon 28 obturant le passage 10.

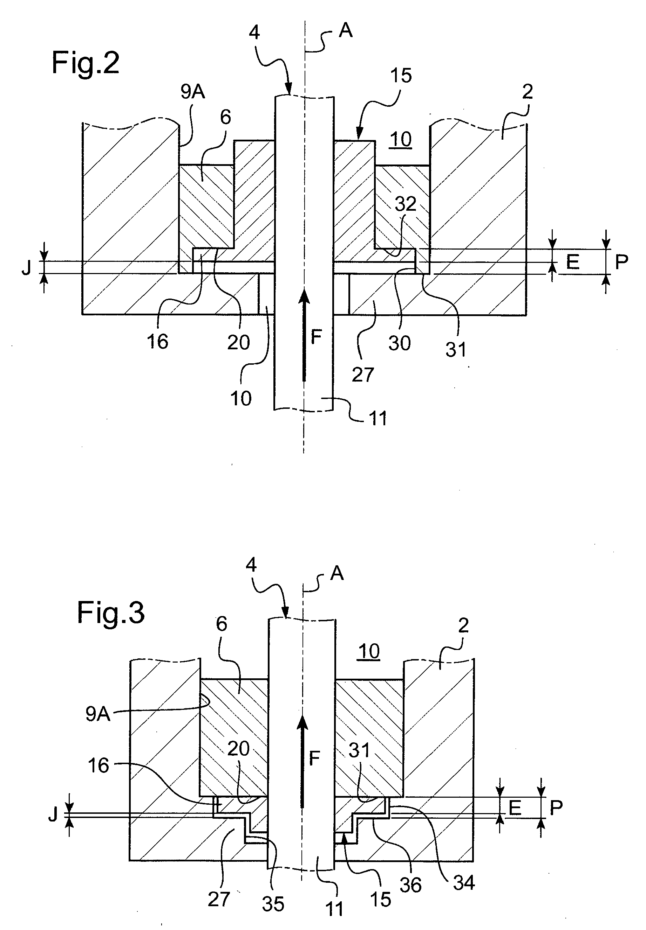

Dans un deuxième mode de réalisation illustré en regard de la figure 2, la bague cylindrique 15 à collerette radiale externe 16 est solidaire de l'arbre rotatif 4, de la même façon que précédemment, mais l'un des paliers, par exemple le palier 6 par analogie à la figure précédente, est à son tour monté sur la bague 15. Ainsi, c'est la bague elle-même qui assure la fonction de guidage de l'arbre, en plus de sa fonction de blocage axial de celui-ci. Le palier 6 est emmanché dans le trou 9A du passage 10, si bien qu'il est immobilisé en position par rapport au corps 2, tandis que la bague 15, solidaire de l'arbre 4, est montée par un ajustement glissant dans le palier 6, pour pouvoir coulisser et pivoter par rapport à celui-ci.

La collerette 16 est alors reçue dans un lamage 30 qui est ménagé dans la face transversale d'extrémité 31 du palier et qui fait office de collerette 18 du palier. La profondeur P du lamage est supérieure à l'épaisseur E de la collerette 16 de sorte à créer par différence le jeu axial J. La face 31 est en appui contre la partie, dans ce cas en rebord, 27 du corps, pour terminer le passage 10. Et la collerette 16 de la bague 15, lorsque l'arbre 4 n'est pas soumis à l'action du ressort 8, peut s'appliquer contre ce rebord 27. Tandis que, lorsque l'arbre est soumis à l'action du ressort, flèche F, par suite du fonctionnement de la vanne 1, la collerette de la bague vient, par sa face transversale 20, au contact du fond 32 du lamage 30 (ce fond 32 correspond à la face précédente 21 du palier), comme le montre la figure 2. Le jeu axial J est alors situé entre la collerette et le rebord du corps.

On comprend donc que le fond 32 du lamage et le rebord 27 du corps servent de butées axiales fonctionnelles pour la bague 15 à collerette 16 et, en conséquence, pour l'arbre rotatif 4, supprimant la nécessité d'une présence de la rondelle 17 dans le mode de réalisation précédent. Bien évidemment, la bague 15 et la collerette 16 assurent les mêmes fonctions et avantages que précédemment, c'est-à-dire une répartition de l'effort du ressort sur une grande zone ou surface de contact et une usure moindre, voire quasi nulle, par son contact direct avec le palier auto-lubrifié à faible frottement, lors de la rotation du volet de l'arbre quand fonctionne la vanne.

Le troisième mode de réalisation illustré en regard de la figure 3 est de conception proche de la deuxième réalisation. En effet, la collerette 16 de la bague 15 est logée, non pas dans un lamage du palier, mais dans un lamage 34 prévu dans le rebord 27 du corps. Ce lamage 34 termine le trou de passage 35 du corps entourant l'extrémité inférieure 11 de l'arbre 4, et reçoit la bague 15. Celle-ci a une position inverse à celle de la figure 2 et sa collerette 16 vient en butée axiale, par sa face 20, contre la face transversale 31 (correspondant à la face 21, figure 1) du palier 6 (qui pourrait être le palier 7), sous l'action du ressort 8, flèche F, lorsque la vanne fonctionne de la manière représentée sur la figure 3. Ou la collerette vient en butée contre le fond 36 du lamage 34 lors du montage par exemple. Les conditions géométriques entre la profondeur P du lamage, l'épaisseur E de la collerette 16 et le jeu J qui en résulte (différence entre P et E) sont identiques au mode de réalisation de la figure 2.

Cependant, le palier 6 est monté autour de l'arbre 4, comme dans le premier mode (figure 1), de sorte que la bague 15 n'assure plus la fonction supplémentaire de guidage de l'arbre, mais sa fonction principale de blocage axial de celui-ci, cette fois dans les deux sens par rapport à l'axe A. La bague est de longueur axiale réduite comparativement à sa réalisation de la figure 2.

En variante, on pourra prévoir une seconde bague cylindrique 15 au contact de l'autre palier 7, en particulier si l'arbre est fortement sollicité axialement à la fois selon le sens de la flèche F et le sens inverse.

La fiabilité de fonctionnement de la vanne décrite dans ces divers modes de réalisation est ainsi garantie à l'usage par le montage de la bague à collerette sur l'arbre rotatif à obturateur et son contact direct avec le palier correspondant sous l'action du ressort de rappel.

## Revendications

1. Vanne de circulation de fluide du type comportant :
- un corps (2) à conduit traversant (3) pour le fluide,
- un arbre de commande rotatif (4) à obturateur du conduit, monté dans un passage (10) du corps communiquant avec le conduit,
- des paliers (6, 7) prévus dans ledit passage entre le corps et l'arbre de commande rotatif,
- un blocage axial de l'arbre dans ledit corps, le blocage axial de l'arbre (4) étant obtenu par au moins une bague cylindrique (15) montée solidaire en rotation sur ledit arbre et présentant une surface externe (20) tournée vers l'un des paliers (6, 7) et venant au contact d'une face transversale de celui-ci, **caractérisé en ce que**
- un ressort de rappel (8) est prévu entre le corps (2) et l'arbre (4) et soumettant l'arbre (4) à une force de rappel, le ressort de rappel (9) et la bague cylindrique (15) étant sans contact l'un avec l'autre.

2. Vanne selon la revendication 1, dans laquelle la bague (15) vient au contact de la face transversale du palier concerné dans le sens du rappel axial auquel est soumis l'arbre (4) par ledit ressort (8).

3. Vanne selon la revendication 2, dans laquelle la bague (15) présente une collerette radiale (16) définissant ladite surface externe (20) tournée vers le palier et venant au contact de la face transversale de celui-ci.

4. Vanne selon la revendication 2 ou 3, dans laquelle la collerette (16) de la bague (15) s'applique directement contre une collerette radiale externe (18) terminant la face transversale du palier (6), sous l'action dudit ressort (8).

5. Vanne selon la revendication 2 ou 3, dans laquelle la collerette (16) de la bague (15) s'engage dans un lamage (30) ménagé dans le palier correspondant.

6. Vanne selon la revendication 5, dans laquelle, autour de la bague (15) solidaire de l'arbre rotatif, est monté le palier (6) logé dans ledit passage, avec la collerette radiale (16) de la bague qui est reçue, avec un jeu fonctionnel, dans le lamage (30) du palier en venant en butée axiale, d'un côté, avec le fond du lamage, dans le sens de l'action du ressort, ou, de l'autre côté, avec une partie du corps délimitant le passage dans le sens opposé.

7. Vanne selon la revendication 2 ou 3, dans laquelle la collerette (16) de la bague (15) s'engage dans un lamage (34) ménagé dans le corps.

8. Vanne selon la revendication 7, dans laquelle le palier (6) est monté sur l'arbre (4) en vis-à-vis de la bague (15), tandis que la collerette (16) s'engage, avec un jeu fonctionnel axial, dans le lamage (34) d'un trou de passage (35) de réception de la bague (15), ménagé dans une partie (27) du corps (2) qui délimite le passage (10), de sorte que la collerette peut venir en butée, d'un côté, avec le palier (4) dans le sens de l'action du ressort ou, de l'autre côté, avec le fond du lamage (34) du corps, dans l'autre sens.

9. Vanne selon l'une quelconque des revendications 1 à 8, chaque palier (6, 7) ne faisant pas saillie au-delà du contour extérieur du corps (2).

10. Vanne selon l'une des revendications 1 à 9, dans laquelle ladite bague (15) est solidaire en rotation de l'arbre (4) par emmanchement, soudage ou analogue.

11. Vanne selon l'une des revendications 1 à 10, dans laquelle les paliers (6, 7) sont montés par ajustement serré dans le passage (10) du corps.

## Patentansprüche

1. Fluidkreislauf-Ventil von der Art, die aufweist:
- einen Körper (2) mit Durchgangskanal (3) für das Fluid,
- eine drehende Steuerwelle (4) mit Verschlusseinrichtung für den Kanal, die in einen mit dem Kanal in Verbindung stehenden Durchgang (10) des Körpers montiert ist,
- Lager (6, 7), die im Durchgang zwischen dem Körper und der drehenden Steuerwelle vorgesehen sind,
- eine axiale Blockierung der Welle im Körper, wobei die axiale Blockierung der Welle (4) durch mindestens einen zylindrischen Ring (15) erhalten wird, der in Drehung fest mit der Welle verbunden montiert ist und eine zu einem der Lager (6, 7) weisende und mit einer Querseite von diesem in Kontakt kommende Außenfläche (20) aufweist,
**dadurch gekennzeichnet, dass**
- eine Rückstellfeder (8) zwischen dem Körper (2) und der Welle (4) vorgesehen ist und die Welle (4) mit einer Rückstellkraft beaufschlagt, wobei die Rückstellfeder (9) und der zylindrische Ring (15) ohne Kontakt miteinander sind.

2. Ventil nach Anspruch 1, wobei der Ring (15) mit der Querseite des betreffenden Lagers in Richtung der axialen Rückstellung in Kontakt kommt, mit der die Welle (4) durch die Feder (8) beaufschlagt wird.

3. Ventil nach Anspruch 2, wobei der Ring (15) einen radialen Kragen (16) aufweist, der die zum Lager weisende Außenfläche (20) definiert und mit dessen Querseite in Kontakt kommt.

4. Ventil nach Anspruch 2 oder 3, wobei der Kragen (16) des Rings (15) sich unter der Wirkung der Feder (8) direkt gegen einen äußeren radialen Kragen (18) anlegt, der die Querseite des Lagers (6) abschließt.

5. Ventil nach Anspruch 2 oder 3, wobei der Kragen (16) des Rings (15) in eine im entsprechenden Lager ausgebildete Senkung (30) eingesetzt wird.

6. Ventil nach Anspruch 5, wobei das im Durchgang angeordnete Lager (6) um den fest mit der drehenden Welle verbundenen Ring (15) montiert wird, wobei der radiale Kragen (16) des Rings, der mit einem Montagespiel in der Senkung (30) des Lagers aufgenommen wird, auf einer Seite mit dem Boden der Senkung in Richtung der Wirkung der Feder, oder auf der anderen Seite mit einem Teil des Körpers, der den Durchgang in entgegengesetzter Richtung begrenzt, in axialen Anschlag kommt.

7. Ventil nach Anspruch 2 oder 3, wobei der Kragen (16) des Rings (15) in eine im Körper ausgebildete Senkung (34) eingesetzt wird.

8. Ventil nach Anspruch 7, wobei das Lager (6) auf die Welle (4) gegenüber dem Ring (15) montiert wird, während der Kragen (16) mit einem axialen Montagespiel in die Senkung (34) eines Durchgangslochs (35) zur Aufnahme des Rings (15) eingesetzt wird, die in einem Teil (27) des Körpers (2) ausgebildet ist, der den Durchgang (10) begrenzt, so dass der Kragen auf der einen Seite mit dem Lager (4) in Richtung der Wirkung der Feder, oder auf der anderen Seite mit dem Boden der Senkung (34) des Körpers in der anderen Richtung in Anschlag kommen kann.

9. Ventil nach einem der Ansprüche 1 bis 8, wobei jedes Lager (6, 7) nicht über den Außenumriss des Körpers (2) vorsteht.

10. Ventil nach einem der Ansprüche 1 bis 9, wobei der Ring (15) durch Einstecken, Schweißen oder dergleichen in Drehung fest mit der Welle (4) verbunden wird.

11. Ventil nach einem der Ansprüche 1 bis 10, wobei die Lager (6, 7) durch Presseinpassung in den Durchgang (10) des Körpers montiert werden.

## Claims

1. Fluid circulation valve comprising:
- a body (2) having a through-channel (3) for the fluid,
- a rotary control shaft (4) having a seal for the channel, mounted in a passage (10) of the body connecting with the channel,
- bearings (6, 7) provided in said passage between the body and the rotary control shaft,
- axial locking of the shaft in said body, the axial locking of the shaft (4) being achieved by at least one cylindrical ring (15) mounted in a rotationally constrained manner on said shaft and having an external surface (20) orientated towards one of the bearings (6, 7) and contacting a transverse face thereof, **characterized in that**
- a return spring (8) provided between the body (2) and the shaft (4) and subjecting the shaft (4) to a return force, the return spring (9) and the cylindrical ring (15) not contacting one another.

2. Valve according to Claim 1, wherein the ring (15) contacts the transverse face of the bearing concerned in the direction of the axial return to which the shaft (4) is subjected by said spring (8).

3. Valve according to Claim 2, wherein the ring (15) has a radial flange (16) defining said external surface (20) orientated towards the bearing and contacting the transverse face thereof.

4. Valve according to Claim 2 or 3, wherein the flange (16) of the ring (15) is pressed directly against an outer radial flange (18) which is at the end of the transverse face of the bearing (6), under the action of said spring (8).

5. Valve according to Claim 2 or 3, wherein the flange (16) of the ring (15) engages in a countersinking (30) provided in the corresponding bearing.

6. Valve according to Claim 5, wherein mounted about the ring (15) that is rigidly connected to the rotary shaft, is the bearing (6) housed in said passage, with the radial flange (16) of the ring which is received, with operational clearance, in the countersinking (30) of the bearing while axially abutting the bottom of the countersinking, in the direction of the spring action, or a portion of the body defining the passage in the opposite direction.

7. Valve according to Claim 2 or 3, wherein the flange (16) of the ring (15) engages in a countersinking (34) provided in the body.

8. Valve according to Claim 7, wherein the bearing (6) is mounted on the shaft (4) opposite the ring (15), whereas the flange (16) engages, with axial operational clearance, in the countersinking (34) of a ring (15) receiving passage (35) hole, which is provided in a portion (27) of the body (2) which defines the passage (10), such that the flange can abut the bearing (4) in the direction of the spring action or the bottom of the countersinking (34) of the body, in the other direction.

9. Valve according to any one of Claims 1 to 8, each bearing (6, 7) not protruding beyond the outer contour of the body (2).

10. Valve according to one of Claims 1 to 9, wherein said ring (15) is constrained to rotate with the shaft (4) by shrink fitting, welding or the like.

11. Valve according to one of Claims 1 to 10, wherein the bearings (6, 7) are mounted by drive fitting in the passage (10) of the body.
